# EUROPÄISCHE PATENTSCHRIFT

(11) **EP 2 210 026 B1**
(45) Veröffentlichungstag und Bekanntmachung des Hinweises auf die Patenterteilung: **09.03.2011**
(21) Anmeldenummer: 08850056.6
(22) Anmeldetag: 11.11.2008
(51) Int. Cl.: F16K 31/53, F02M 25/07, F02B 37/18

(54) **STELLANTRIEB FÜR BIDIREKTIONALES STELLGLIED**
ACTUATING DRIVE FOR BIDIRECTIONAL ACTUATOR
SERVOMOTEUR POUR ACTIONNEUR BIDIRECTIONNEL

(30) Priorität: 16.11.2007 DE 102007054769
(43) Veröffentlichungstag der Anmeldung: 28.07.2010
(73) Patentinhaber: MAHLE International GmbH, 70376 Stuttgart (DE)
(72) Erfinder: GRACNER, Reinhold, A-9112 Gritten (AT); KLEMEN, David, A-9100 Völkermarkt (AT)
(74) Vertreter: BRP Renaud & Partner
(86) Internationale Anmeldenummer: PCT/EP2008/065288
(87) Internationale Veröffentlichungsnummer: WO 2009/062928

(56) Entgegenhaltungen:
- EP-A- 1 028 249
- EP-A- 1 647 698
- WO-A-02/095209
- WO-A-2007/059100
- DE-A1- 10 327 868
- US-A- 4 690 119
- US-B1- 6 216 677

## Beschreibung

Die vorliegende Erfindung betrifft einen Stellantrieb für ein bidirektional verstellbares Stellglied. Die Erfindung betrifft außerdem eine Abgasrückführeinrichtung bzw. einen Abgasturbolader, die mit einem derartigen Stellantrieb ausgestattet sind.

Um bei einer Abgasrückführeinrichtung ein Ventilglied, das bei einem Abgasrückführventil zum Steuern einer Abgasrückführrate verwendet wird, betätigen zu können, ist ein Stellantrieb erforderlich. An einen derartigen Stellantrieb werden erhöhte Anforderungen gestellt. Beispielsweise kann im Abgas mitgeführter Ruß dazu führen, dass das Ventilglied mit einem dazu komplementären Ventilsitz verklebt, wodurch relativ hohe Antriebskräfte erforderlich sind, um das Ventilglied vom Sitz abheben zu können. Desweiteren muss das Ventilglied zur Erzielung hoher Abgasrückführraten einen vergleichsweise großen Hub realisieren können. Ferner sind vergleichsweise kurze Stellzeiten zu realisieren. Ähnliche Probleme können auch bei anderen Komponenten von Abgasanlagen auftreten. Beispielsweise bei einem Abgasturbolader. Ein derartiger Abgasturbolader kann mit einem sog. Wastegate-Ventil ausgestattet sein, mit dem bei einer Turbine des Abgasturboladers die Hochdruckseite mit der Niederdruckseite verbindbar ist, beispielsweise um eine Überlastung des Turboladers zu vermeiden. Da sich auch das Wastegate-Ventil abgasseitig befindet, sind auch hier zum Öffnen, zum Schließen und zum Geschlossenhalten relativ große Betätigungskräfte erforderlich. Außerdem gibt es Turbolader mit verstellbarer Leitschaufelgeometrie, um den Turbolader an unterschiedliche Betriebszustände der damit ausgestatteten Brennkraftmaschine anzupassen. Auch hier können bidirektional arbeitende Stellantriebe zur Anwendung kommen.

Aus der DE 10 2005 028 372 ist ein Stellantrieb bekannt, bei dem ein Elektromotor über ein Zahnradgetriebe eine Stellwelle drehend antreibt. Zur Realisierung eines großen Übersetzungsverhältnisses und somit eines großen Drehmoments an der Stellwelle sind zwei erste Zahnräder mit gleicher Zähnezahl mit einer Antriebswelle des Elektromotors drehfest verbunden und dabei so angeordnet, dass ihre Zähne zueinander versetzt sind. Die beiden ersten Zahnräder stehen mit zwei zweiten Zahnrädern in Eingriff, die ebenfalls gleiche Zähnezahlen aufweisen und mit Zahnversatz axial nebeneinander angeordnet sind.

Aus der DE 198 54 614 A1 ist eine Stelleinrichtung bekannt, bei der in ein bidirektional verstellbares Stellglied ein Stellkraftverstärker integriert ist. Das Stellglied besteht aus zwei Stangen, die einerseits über eine Druckfeder und andererseits über den Stellkraftverstärker miteinander gekoppelt sind. Die Stellkrafteinleitung erfolgt an der ersten Stange, während die zweite Stange mit dem jeweiligen zu betätigenden Stellgerät, z.B. ein Abgasrückführventil, antriebsgekoppelt ist. Bei einem normalen Stellwiderstand, z.B. bei einem nicht klebenden AGR-Ventil, können die Stellkräfte von der ersten Stange über die Druckfeder direkt, also ohne Kraftübersetzung, auf die zweite Stange übertragen werden. Bei einem erhöhten Stellwiderstand, z.B. bei einem klebenden AGR-Ventil, führt die Bewegung der ersten Stange zum Zusammendrücken der Druckfeder und nach einem Freigang zur Betätigung des Kraftverstärkers, der über eine Kniehebelanordnung den großen Verstellweg der ersten Stange in einen kleinen Verstellweg an der zweiten Stange übersetzt, wobei gleichzeitig eine entsprechende Kraftverstärkung erfolgt. Sobald eine anfängliche Klebekraft überwunden ist, kann die Druckfeder den übrigen Stellweg wieder ausgleichen.

Ein derartiger Stellantrieb ist aus den Druckschriften EP 1028249 und WO 02095209 bereits bekannt.

Die vorliegende Erfindung beschäftigt sich mit dem Problem, für einen Stellantrieb der eingangs genannten Art bzw. für einen damit ausgestatteten Abgasturbolader bzw. eine damit ausgestattete Abgasrückführeinrichtung, insbesondere ein Abgasrückführventil, eine verbesserte Ausführungsform anzugeben, die sich durch eine vergleichsweise preiswerte Realisierbarkeit und/oder durch eine definierte Kraft-Weg-Kennlinie auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Elektromotor über ein Zahnradgetriebe mit einem Kniehebel zu koppeln, derart, dass der Kniehebel wie eine Pleuelstange einenends mit dem bidirektional zu verstellenden Stellglied, vergleichbar einem Kolben, und anderenends mit einem Verzahnungselement des Zahnradgetriebes, vergleichbar einer Kurbelwelle, zusammenwirkt. Dabei ist die relative Lage zwischen dem Kniehebel und dem Verzahnungselement in einem Ausgangszustand des Stellantriebs so gewählt, dass sich zu Beginn einer Stellbewegung die größten Stellkräfte ergeben. Diese Relativlage ist vergleichbar der Relativlage einer Pleuelstange in einem Totpunkt eines damit angetriebenen Kolbens. Durch die vorgeschlagene Bauweise lassen sich vergleichsweise große Stellkräfte zu Beginn der Stellbewegung realisieren, wobei gegen Ende der Stellbewegung relativ hohe Stellgeschwindigkeiten erzielbar sind. Somit lassen sich insbesondere bei einem abgasseitigen Ventilglied Verklebungen zwischen dem Ventilglied und einem zugehörigen Ventilsitz überwinden, wobei gleichzeitig große Stellhübe in akzeptablen Stellzeiten realisierbar sind. Ferner baut ein derartiger Stellantrieb vergleichsweise preiswert. Auch kann der Aufbau relativ kompakt ausgeführt werden. Insbesondere lassen sich hiermit hohe Schließkräfte erreichen, um ein dichtes Verschließen eines Waste-Gate-Ventils zu erzielen.

Gemäß der Erfindung weist der Kniehebel zwischen den Kniehebellagern eine seitliche Aussparung auf, durch die sich eine sich durch die beiden Kniehebellager erstreckende Gerade erstreckt und in die ein einem Schwenklager, um welches das mit dem Kniehebel gekoppelte Verzahnungselement verschwenkbar gelagert ist, zugeordneter Bereich des Verzahnungselements im Ausgangszustand des Stellantriebs eintaucht. Hierdurch kann bei kompakter Bauweise eine Ausführungsform realisiert werden, bei welcher die genannte erste Gerade mit einer Geraden, die sich durch das Schwenklager des Verzahnungselements und durch das zwischen Kniehebel und Verzahnungselement ausgebildete Kniehebellager erstreckt, nahezu oder weitgehend in Überdeckung gebracht werden, wodurch extrem hohe Anfangskräfte beim Öffnen und Endkräfte beim Schließen erzielbar sind. Der Winkel zwischen den beiden Geraden ist im Ausgangszustand dann beispielsweise kleiner als 20° oder kleiner als 10° oder kleiner als 5°.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht eines Stellantriebs bei einer ersten Ausführungsform,
- Fig. 2: eine Seitenansicht entsprechend einer Blickrich- tung II in Fig. 1,
- Fig. 3: eine Seitenansicht entsprechend einer Blickrich- tung III in Fig. 1,
- Fig. 4: eine Ansicht wie in Fig, 1, jedoch bei einer zwei- ten Ausführungsform.

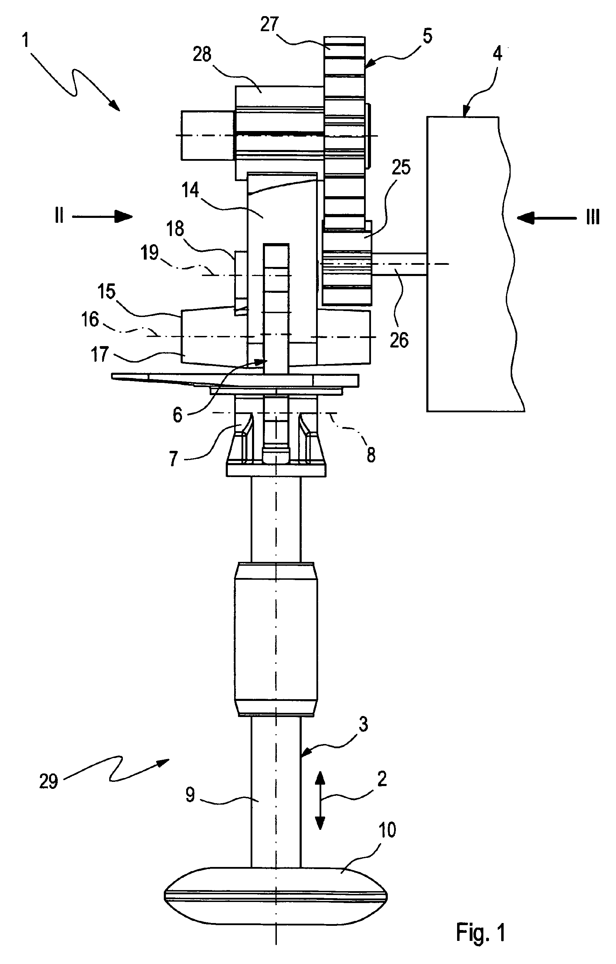

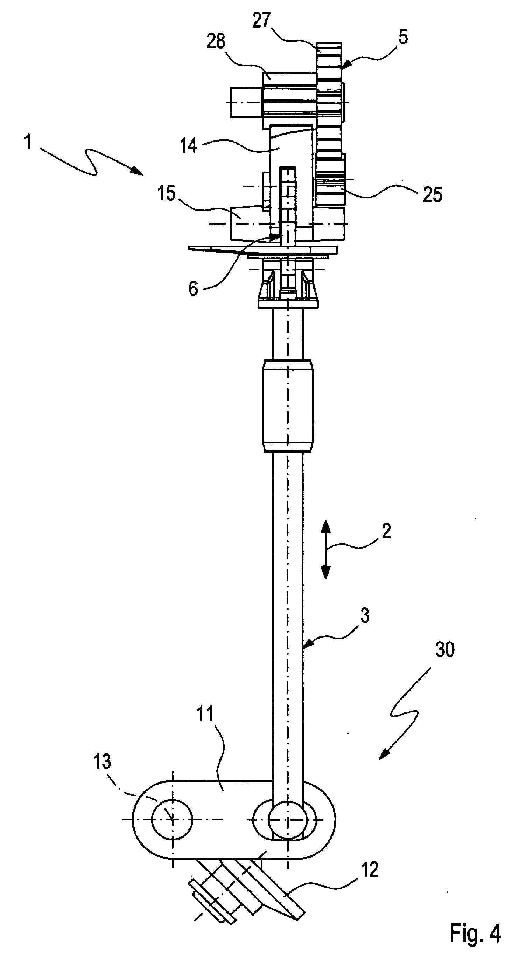

Entsprechend den Fig. 1 bis 4 umfasst ein Stellantrieb 1, mit dessen Hilfe ein entsprechend einem Doppelpfeil 2 bidirektional verstellbares Stellglied 3 antreibbar ist, einen Elektromotor 4, ein Zahnradgetriebe 5 und einen Kniehebel 6. Der Kniehebel 6 ist über ein erstes Kniehebellager 7 mit dem Stellglied 3 gelenkig verbindbar. Eine entsprechende erste Kniehebellagerachse ist hier mit 8 bezeichnet. Im gezeigten montierten Zustand ist der Kniehebel 6 über sein erstes Kniehebellager 7 mit dem Stellglied 3 gelenkig verbunden. Bei der in den Fig. 1 bis 3 gezeigten Ausführungsform handelt es sich beim Stellglied 3 um ein Ventilglied 9, das einen Ventilkörper 10 trägt. Bei der in Fig. 4 gezeigten Ausführungsform dient das Stellglied 3 zum Antreiben eines Umlenkhebels 11, der seinerseits drehfest mit einem Ventilkörper 12 verbunden ist, selbst um eine Drehachse 13 verschwenkbar gelagert ist und dadurch ein Verschwenken des Ventilkörpers 12 um diese Drehachse 13 ermöglicht.

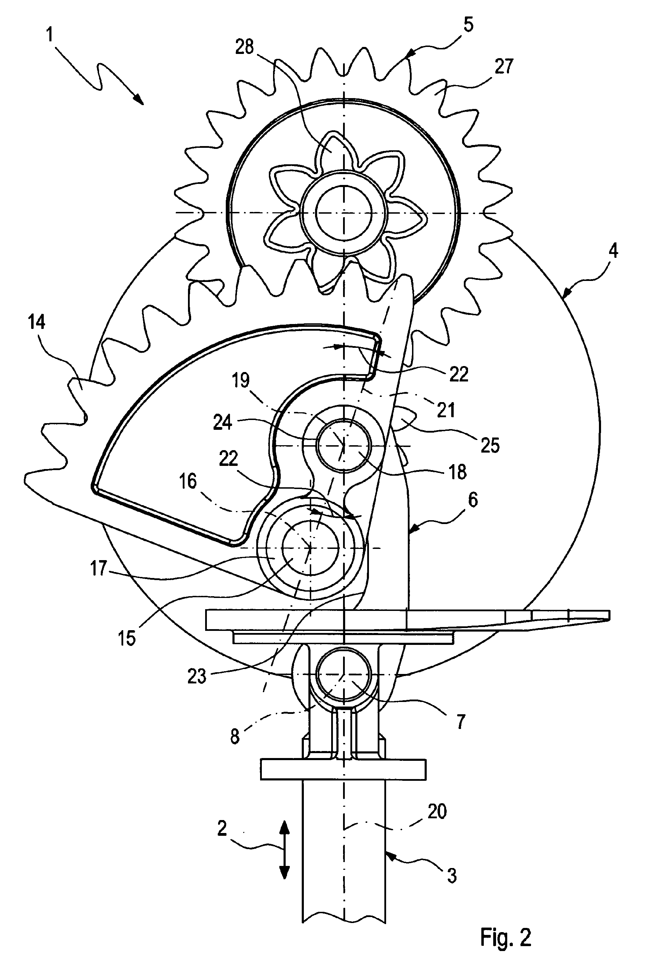

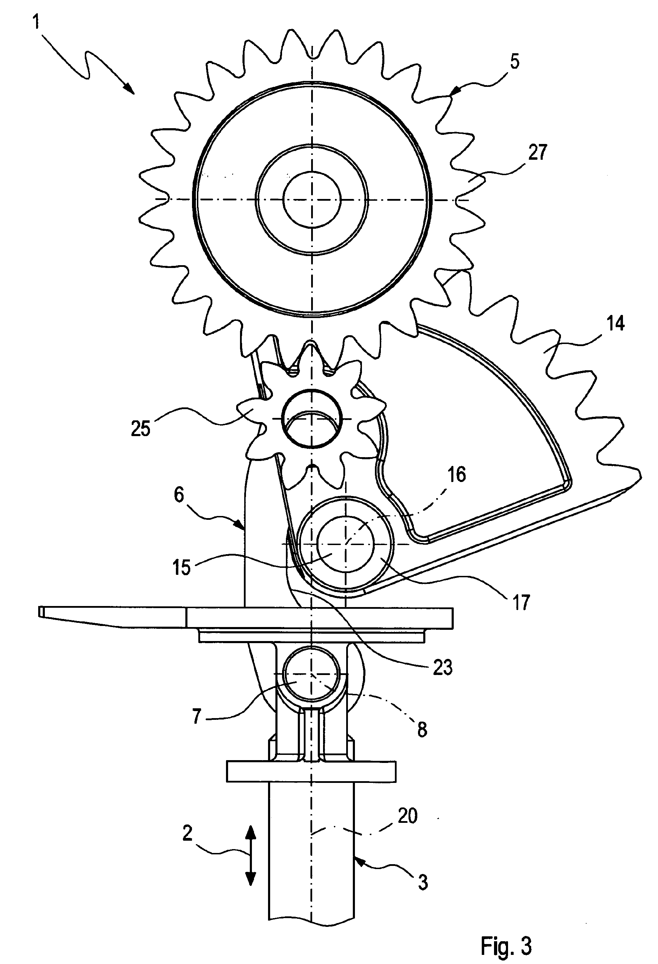

Das Zahnradgetriebe 5 verbindet den Elektromotor 4 mit dem Kniehebel 6. Hierzu weist das Zahnradgetriebe 5 ein ausgangsseitiges Verzahnungselement 14 auf, das in einem Schwenklager 15 um eine Schwenkachse 16 schwenkverstellbar gelagert ist. Das Schwenklager 15 ist im Beispiel durch eine Schwenklagerwelle 17 gebildet, die im montierten Zustand des Stellantriebs 1 in ortsfeste Wellenaufnahmen eingesetzt ist, beispielsweise in einem den Stellantrieb 1 umschließenden Gehäuse, das hier nicht dargestellt ist. Der Kniehebel 6 ist an diesem Verzahnungselement 14 über ein zweites Kniehebellager 18 gelenkig gekoppelt, wobei der Kniehebel 6 im zweiten Kniehebellager 18 um eine zweite Kniehebellagerachse 19 relativ zum Verzahnungselement 14 verschwenkbar ist. Entsprechend den Fig. 2 und 3, die ebenso wie die Fig. 1 und 4 einen Ausgangszustand des Stellantriebs 1 zeigen, der einer Ausgangsstellung des jeweiligen Stellglieds 3 zugeordnet ist, sind das genannte ausgangsseitige Verzahnungselement 14 und der Kniehebel 6 relativ zueinander so angeordnet und auβerdem so ausgestaltet, dass sich folgender geometrischer Zusammenhang ergibt:

Zwischen einer ersten Geraden 20, die sich durch die beiden Kniehebellager 7,18 bzw. durch deren Lagerachsen 8,19 erstreckt, und einer zweiten Geraden 21, die sich durch das Schwenklager 15 und das zweite Kniehebellager 18 bzw. durch die zugehörigen Schwenkachsen 16,19 erstreckt, ist ein Winkel 22 aufgespannt, der im Ausgangszustand des Stellantriebs 1 spitz ist. Insbesondere ist dieser Winkel 22 kleiner als 20°.

Besonders vorteilhaft ist dabei die hier gezeigte Ausführungsform, bei welcher das Verzahnungselement 14 und der Kniehebel 6 so ausgestaltet und angeordnet bzw. aufeinander abgestimmt sind, dass im gezeigten Ausgangszustand des Stellantriebs 1 die erste Gerade 20 quasi parallel zur Hubrichtung 2 des Stellglieds 3 verläuft.

Durch diese Konstellation ergibt sich ein Aufbau entsprechend einem Kurbeltrieb bei einem Kolbenmotor, bei dem eine Kurbelwelle über eine Pleuelstange einen Kolben bidirektional antreibt. Beim gezeigten Stellantrieb 1 entspricht der Kniehebel 6 dann im wesentlichen der genannten Pleuelstange, das Verzahnungselement 14 entspricht der Kurbelwelle und das Stellglied 3 entspricht dann dem Kolben. Der gezeigte Ausgangszustand des Stellantriebs 1 ist dann mit einem Totpunkt des Kolbens vergleichbar. Dementsprechend beginnt ein Hub des Stellglieds 3 aus seiner Ausgangsstellung heraus mit einer kleinen Stellgeschwindigkeit, jedoch mit einer großen Stellkraft. Mit zunehmendem Hub wird der Winkel 22 zwischen den beiden Geraden 20,21 größer, wodurch die Stellgeschwindigkeit des Stellglieds 3 zunimmt, während gleichzeitig die wirksame Stellkraft abnimmt.

Um die gewünschte achsparallele Ausrichtung der ersten Geraden 20 und der Hubrichtung 2 bei einem möglichst kleinen Winkel 22 realisieren zu können, weist der Kniehebel 6 zwischen seinen Kniehebellagern 7,18 eine seitliche Aussparung 23 auf. Durch diese Aussparung 23 erstreckt sich die erste Gerade 20. Ferner ist die Positionierung dieser Aussparung 23 so gewählt, dass im Ausgangszustand des Stellantriebs 1 ein dem Schwenklager 15 zugeordneter Bereich des ausgangsseitigen Verzahnungselements 14 in diese Aussparung 23 eintaucht.

Im gezeigten, bevorzugten Beispiel ist das ausgangsseitige Verzahnungselement 14 ein Zahnradsegment, das sich in Umfangsrichtung um weniger als 360° erstreckt. Bevorzugt erstreckt sich das Zahnradsegment 14 in Umfangsrichtung um etwa 90°. Ebenso sind kleinere Erstreckungswinkel denkbar. Das Zahnradsegment 14 kann im Bereich der Anbindung des Kniehebels 6 geteilt sein, so dass der Kniehebel 6 im zweiten Kniehebellager 18 im Inneren des Zahnradsegments 14 angelenkt ist. Hierbei kann ein Lagerzapfen 24 sich beiderseits des Kniehebels 6 erstreckende Wangen des Zahnradsegments 14 und den Kniehebel 6 durchsetzen.

Das hier gezeigte Zahnradgetriebe 5 umfasst ein eingangsseitiges Zahnrad 25, das mit einer Antriebswelle 26 des Elektromotors 4 drehfest verbunden ist. Dieses eingangsseitige Zahnrad 25 kämmt mit einem ersten Übersetzungszahnrad 27, das eine deutlich größere Zähnezahl aufweist als das eingangsseitige Zahnrad 25. Hierdurch kann eine erste Übersetzungsstufe realisiert werden. Das erste Übersetzungszahnrad 27 ist mit einem zweiten Übersetzungszahnrad 28 drehfest verbunden, dessen Zähnezahl kleiner ist als die des ersten Übersetzungszahnrads 27. Das zweite Übersetzungszahnrad 28 kämmt das ausgangsseitige Verzahnungselement, also hier das Zahnradsegment 14. Die Zähnezahl des zweiten Übersetzungszahnrads 28 ist dabei pro Umfangssegment deutlich kleiner als die Zähnezahl des Zahnradsegments 14. Hierdurch wird eine zweite Übersetzungsstufe realisiert. Eine weitere Übersetzung wird dadurch erzielt, dass der Abstand zwischen der Schwenkachse 16 und der zweiten Kniehebellagerachse 19 kleiner ist als der Abstand zwischen der Schwenkachse 16 und dem Eingriff zwischen dem ausgangsseitigen Verzahnungselement 14 und dem zweiten Übersetzungszahnrad 28.

Das hier gezeigte Zahnradgetriebe 5 entspricht im wesentlichen einem zweistufigen Stirnradgetriebe, das antriebsseitig eine Kniehebelkopplung mit dem bidirektional oder bilinear verstellbaren Stellglied 3 aufweist. Beispielsweise kann ein bevorzugtes Übersetzungsverhältnis dieses zweistufigen Stirnradgetriebes 12,95 betragen. Diese Gesamtübersetzung kann beispielsweise dadurch realisiert werden, dass eine erste Getriebestufe eine Übersetzung von 2,667 aufweist, während eine zweite Getriebestufe eine Übersetzung von 4,857 besitzt. Durch den Kniehebel 6 wird insbesondere bei einer Ansteuerung von Ventilen, gerade im Bereich kleiner Öffnungsquerschnitte ein nicht lineares Öffnungsverhalten mit geringer Stellgeschwindigkeit und hohen Öffnungskräften erreicht. Dies kann zu einer präzisen Dosierbarkeit bei einem Abgasrückführventil bzw. zu einer exakten Regelung des Ladedrucks bei einem Wastegate-Ventil im Bereich geringer Öffnungsquerschnitte genutzt werden.

Entsprechend Fig. 1 besitzt dieses AGR-Ventil 29 das Ventilglied 9, mit dessen Hilfe ein durchströmbarer Querschnitt gesteuert werden kann. Beispielsweise steuert das Ventilglied 9 mit seinem Ventilkörper 10 einen durchströmbaren Querschnitt in einer Abgasrückführleitung. In Abhängigkeit der Hubstellung des Ventilglieds 9 lässt sich eine Abgasrückführrate durch die genannte AGR-Leitung einstellen. Der hier vorgeschlagene Stellantrieb 1 kann nun zum Antreiben des Ventilglieds 9 genutzt werden. Hierzu kann ein derartiger Stellantrieb 1 in das Abgasrückführventil 29 integriert werden, derart, dass der Kniehebel 6 mit dem Stellglied 9 antriebsgekoppelt ist.

Entsprechend Fig. 4 kann ein hier nur im Bereich seines Wastegate-Ventils 12 dargestellter Abgasturbolader 30 zum Antreiben seines Wastegate-Ventils 12 mit dem hier gezeigten Stellantrieb 1 ausgestattet sein. Der Abgasturbolader 30 dient bei einer Brennkraftmaschine, die sich insbesondere in einem Kraftfahrzeug befindet, zur Erhöhung des Druckniveaus auf der Frischgasseite. Hierzu besitzt der Abgasturbolader 30 in üblicher Weise einen frischgasseitig angeordneten Kompressor oder Verdichter und eine abgasseitig angeordnete Turbine. Mit dem Wastegate-Ventil 12 bzw. mit dessen hier dargestellten Ventilglied 12 kann ein Bypass gesteuert werden, der eine Hochdruckseite der Turbine mit einer Niederdruckseite der Turbine verbindet. Hierdurch lässt sich die Leistungsabgabe des Turboladers steuern. Bemerkenswert ist hierbei, dass das Ventilglied 12 selbst hier eine Schwenkbewegung durchführt, nämlich um die Schwenkachse 13, während mit dem Stellantrieb 1 an sich nur eine bilineare Hubbewegung realisierbar ist.

Desweiteren ist es grundsätzlich möglich, mit Hilfe des hier vorgestellten Stellantriebs 1 auch andere Stellaufgaben zu lösen, bei denen es insbesondere auf einen degressiven Stellkraftverlauf bzw. auf einen progressiven Stellwegverlauf ankommt. Denkbar ist beispielsweise auch eine Anwendung, bei der mit Hilfe des Stellantriebs 1 eine verstellbare Leitschaufelgeometrie einer Turbine eines Abgasturboladers verstellbar ist bzw. gesteuert werden kann.

## Patentansprüche

1. Stellantrieb für ein bidirektional verstellbares Stellglied (3), insbesondere für eine Abgasrückführeinrichtung (29) oder für einen Abgasturbolader (30),
- mit einem Elektromotor (4),
- mit einem Kniehebel (6), der über ein erstes Kniehebellager (7) mit dem Stellglied (3) gelenkig verbindbar ist,
- mit einem Zahnradgetriebe (5), das den Elektromotor (4) mit dem Kniehebel (6) verbindet,
- wobei das Zahnradgetriebe (5) ein in einem Schwenklager (15) gelagertes ausgangsseitiges Verzahnungselement (14) aufweist, an dem der Kniehebel (6) über ein zweites Kniehebellager (18) gelenkig gelagert ist,
- wobei in einem Ausgangszustand des Stellantriebs (1), der einer Ausgangsstellung des Stellglieds (3) zugeordnet ist, ein Winkel (22) zwischen einer ersten Geraden (20), die sich durch das erste Kniehebellager (7) und durch das zweite Kniehebellager (18) erstreckt, und einer zweiten Geraden (21), die sich durch das Schwenklager (15) und durch das zweite Kniehebellager (18) erstreckt, spitz ist,
**dadurch gekennzeichnet,**
**dass** der Kniehebel (6) zwischen den Kniehebellagern (7,18) eine seitliche Aussparung (23) aufweist, durch die sich die erste Gerade (20) erstreckt und in die ein dem Schwenklager (15) zugeordneter Bereich des ausgangsseitigen Verzahnungselements (14) im Ausgangszustand des Stellantriebs (1) eintaucht.

2. Stellantrieb nach Anspruch 1,
**dadurch gekennzeichnet,**
**dass** im Ausgangszustand des Stellantriebs (1) die erste Gerade (20) im wesentlichen oder nahezu parallel zur Hubrichtung (2) des Stellglieds (3) verläuft.

3. Stellantrieb nach einem der Ansprüche 1 und 2,
**dadurch gekennzeichnet,**
**dass** das ausgangsseitige Verzahnungselement ein Zahnradsegment (14) ist, das sich in Umfangsrichtung insbesondere um etwa 90° oder weniger als 90° erstreckt.

4. Stellantrieb nach einem der Ansprüche 1 bis 3,
**dadurch gekennzeichnet,**
**dass** das Zahnradgetriebe (5) ein mit einer Antriebswelle (26) des Elektromotors (4) drehfest verbundenes eingangsseitiges Zahnrad (25) aufweist.

5. Stellantrieb nach Anspruch 4,
**dadurch gekennzeichnet,**
**dass** das eingangsseitige Zahnrad (25) ein erstes Übersetzungszahnrad (27) kämmt, das eine größere Zähnezahl aufweist als das eingangsseitige Zahnrad (25).

6. Stellantrieb nach Anspruch 5,
**dadurch gekennzeichnet,**
**dass** das erste Übersetzungszahnrad (27) drehfest mit einem zweiten Übersetzungszahnrad (28) verbunden ist, das eine kleinere Zähnezahl aufweist als das erste Übersetzungszahnrad (27).

7. Stellantrieb nach Anspruch 6,
**dadurch gekennzeichnet,**
**dass** das zweite Übersetzungszahnrad (28) das ausgangsseitige Verzahnungselement (14) kämmt, wobei das ausgangsseitige Verzahnungselement (14) pro Umfangssegment eine größere Zähnezahl aufweist als das zweite Übersetzungszahnrad (28).

8. Abgasrückführventil für eine Abgasrückführeinrichtung einer Brennkraftmaschine, insbesondere in einem Kraftfahrzeug,
- mit einem Ventilglied (9) zum Steuern eines durchströmbaren Querschnitts, mit dem in Abhängigkeit seiner Huberstellung eine Abgasrückführrate der Abgasrückführeinrichtung einstellbar ist,
- mit einem Stellantrieb (1) nach einem der Ansprüche 1 bis 7 zum Antreiben des Ventilglieds (9).

9. Abgasturbolader für eine Brennkraftmaschine, insbesondere in einem Kraftfahrzeug,
- mit einem Wastegate-Ventil, dessen Ventilglied (12) zum Steuern eines eine Hochdruckseite mit einer Niederdruckseite einer Turbine des Abgasturboladers (30) verbindenden Bypasses dient,
- mit einem Stellantrieb (1) nach einem der Ansprüche 1 bis 7 zum Antreiben des Ventilglieds (12).

10. Abgasturbolader für eine. Brennkraftmaschine, insbesondere in einem Kraftfahrzeug,
- mit einer Turbine, die eine mit einem Stellglied (3) verstellbare Leitschaufelgeometrie aufweist,
- mit einem Stellantrieb (1) nach einem der Ansprüche 1 bis 7 zum Antreiben des Stellglieds (3).

## Claims

1. An actuating drive for a bidirectionally adjustable actuator (3), more preferably for an exhaust gas recirculation device (29) or for an exhaust gas turbocharger (30),
- with an electric motor (4),
- with a toggle lever (6), which can be connected in an articulated manner with the actuator (3) via a first toggle lever bearing (7),
- with a gearing (5), connecting the electric motor (4) with the toggle lever (6),
- wherein the gearing (5) comprises a toothing element (14) on the output side mounted in a pivot bearing (15), on which the toggle lever (6) is mounted in an articulated manner via a second toggle lever bearing (18),
- wherein in a starting state of the actuating drive (1), which is associated with a starting position of the actuator (3), an angle (22) between a first straight line (20) which extends through the first toggle lever bearing (7) and through the second toggle lever bearing (18), and a second straight line (21), which extends through the pivot bearing (15) and through the second toggle lever bearing (18), is acute,
**characterized in that** the toggle lever (6) between the toggle lever bearings (7, 18) comprises a lateral clearance (23) through which the first straight line (20) extends and in which a region of the toothing element (14) on the output side assigned to the pivot bearing (15) dips in the starting state of the actuating drive (1).

2. The actuating drive according to Claim 1, **characterized in that** in the starting state of the actuating drive (1) the first straight line (20) substantially or almost runs parallel to the stroke direction (2) of the actuator (3).

3. The actuating drive according to any one of the Claims 1 and 2, **characterized in that** the toothing element on the output side is a gear segment (14) which in circumferential direction more preferably extends by approximately 90° or less than 90°.

4. The actuating drive according to any one of the Claims 1 to 3, **characterized in that** the gearing (5) comprises a gear (25) on the input side connected with a drive shaft (26) of the electric motor (4) in a rotationally fixed manner.

5. The actuating drive according to Claim 4, **characterized in that** the gear (25) on the input side meshes with a first transmission gear (27) which has a greater number of teeth than the gear (25) on the input side.

6. The actuating drive according to Claim 5, **characterized in that** the first transmission gear (27) is connected in a rotationally fixed manner with a second transmission gear (28) which has a smaller number of teeth than the first transmission gear (27).

7. The actuating drive according to Claim 6, **characterized in that** the second transmission gear (28) meshes with the toothing element (14) on the output side, wherein the toothing element (14) on the output side has a greater number of teeth per circumferential segment than the second transmission gear (28).

8. An exhaust gas recirculation valve for an exhaust gas recirculating device of an internal combustion engine, more preferably in a motor vehicle,
- with a valve member (9) for controlling a cross section through which a flow can flow, with which an exhaust gas recirculating rate of the exhaust gas recirculation device can be adjusted as a function of its stroke position,
- with an actuating drive (1) according to any one of the Claims 1 to 7 for driving the valve member (9) .

9. An exhaust gas turbocharger for an internal combustion engine, more preferably in a motor vehicle,
- with a wastegate valve whose valve member (12) serves for controlling a by-pass connecting a high-pressure side with a low-pressure side of a turbine of the exhaust gas turbocharger (30),
- with an actuating drive (1) according to any one of the Claims 1 to 7 for driving the valve member (12).

10. An exhaust gas turbocharger for an internal combustion engine, more preferably in a motor vehicle,
- with a turbine having a guide blade geometry that is adjustable with an actuator (3),
- with an actuating drive (1) according to any one of the Claims 1 to 7 for driving the actuator (3) .

## Revendications

1. Servocommande pour actionneur réglable bidirectionnellement (3), notamment pour un dispositif de réintroduction de gaz d'échappement (29) ou pour un turbocompresseur de gaz d'échappement (30),
- comportant un moteur électrique (4),
- comportant une genouillère (6), qui peut être reliée de manière articulée à l'actionneur (3) par l'intermédiaire d'un premier palier de genouillère (7),
- comportant une transmission à roue dentée (5), qui relie le moteur électrique (4) à la genouillère (6),
- dans laquelle la transmission à roue dentée (5) présente un élément de denture (14) du côté de sortie positionné dans un palier d'articulation (15), sur lequel la genouillère (6) est positionnée de manière articulée par l'intermédiaire d'un deuxième palier de genouillère (18),
- dans laquelle dans un état de sortie de la servocommande (1) qui est coordonné à une position de sortie de l'actionneur (3), un angle (22) entre une première droite (20), qui s'étend à travers le premier palier de genouillère (7) et à travers le deuxième palier de genouillère (18), et une deuxième droite (21), qui s'étend à travers le palier d'articulation (15) et à travers le deuxième palier de genouillère (18), est aigu,
**caractérisé en ce que**
la genouillère (6) entre les paliers de genouillère (7, 18) présente une cavité latérale (23), à travers laquelle s'étend la première droite (20) et dans laquelle une zone de l'élément de denture du côté de sortie (14) coordonné au palier d'articulation (15)plonge en l'état de sortie de la servocommande (1).

2. Servocommande selon la revendication 1,
**caractérisée en ce que**
en l'état de sortie de la servocommande (1) la première droite (20) s'étend essentiellement ou approximativement parallèlement à la direction de levage (2) de l'actionneur (3).

3. Servocommande selon la revendication 1 et 2,
**caractérisée en ce que**
l'élément de denture du côté de sortie est un segment de roue dentée (14), qui s'étend dans la direction circonférentielle notamment à environ 90° ou moins de 90°.

4. Servocommande selon une des revendications 1 à 3,
**caractérisée en ce que**
la transmission à roue dentée (5) présente une roue dentée (25) du côté d'entrée reliée de manière solidaire en rotation à un arbre d'entraînement (26) du moteur électrique (4).

5. Servocommande selon la revendication 4,
**caractérisée en ce que**
la roue dentée du côté d'entrée (25) s'engrène avec une première roue dentée de translation (27), qui présente un plus grand nombre de dents que la roue dentée du côté d'entrée (25).

6. Servocommande selon la revendication 5,
**caractérisée en ce que**
la première roue dentée de translation (27) est reliée de manière solidaire en rotation à une deuxième roue dentée de translation (28), qui présente un plus petit nombre de dents que la première roue dentée de translation (27).

7. Servocommande selon la revendication 6,
**caractérisée en ce que**
la deuxième roue dentée de translation (28) s'engrène avec l'élément de denture du côté de sortie (14), dans laquelle l'élément de denture du côté de sortie (14) présente par segment de circonférence un plus grand nombre de dents que la deuxième roue dentée de translation (28).

8. Soupape de réintroduction de gaz d'échappement pour un dispositif de réintroduction de gaz d'échappement d'un moteur à combustion interne, notamment dans un véhicule automobile,
- comportant un organe de soupape (9) pour commander une section transversale pouvant être traversée, avec laquelle en fonction de sa position de levage un taux de réintroduction de gaz d'échappement du dispositif de réintroduction de gaz d'échappement peut être réglé,
- comportant un actionneur (1) selon une des revendications 1 à 7 pour entraîner l'organe de soupape (9).

9. Turbocompresseur de gaz d'échappement pour un moteur à combustion interne, notamment dans un véhicule automobile,
- comportant une soupape de décharge, dont l'organe de soupape (12) sert à commander une dérivation reliant un côté de haute pression à un côté de basse pression d'une turbine du turbocompresseur de gaz d'échappement (30),
- comportant une servocommande (1) selon une des revendications 1 à 7 pour entraîner l'organe de soupape (12).

10. Turbocompresseur de gaz d'échappement pour un moteur à combustion interne, notamment dans un véhicule automobile,
- comportant une turbine, qui présente une géométrie d'aube directrice réglable avec un actionneur (3),
- comportant une servocommande (1) selon une des revendications 1 à 7 pour entraîner l'actionneur (3) .
